# EUROPÄISCHE PATENTSCHRIFT

(11) **EP 2 384 641 B1**
(45) Veröffentlichungstag und Bekanntmachung des Hinweises auf die Patenterteilung: **05.08.2020**
(21) Anmeldenummer: 11003661.3
(22) Anmeldetag: 04.05.2011
(51) Int. Cl.: A22C 15/00

(54) **Vorrat an flexiblen Aufhängeelementen mit Plombe und Vorrichtung zu ihrer Zuführung in eine Verpackungsmaschine**
Supply of suspension elements with anti-tamper seal and device for their feeding into a packaging machine
Ensemble d'éléments de suspension fournis avec un plomb et dispositif pour leur alimentation dans une machine d'emballage

(30) Priorität: 04.05.2010 DE 202010006403 U
(43) Veröffentlichungstag der Anmeldung: 09.11.2011
(73) Patentinhaber: Poly-clip System GmbH & Co. KG, 65795 Hattersheim (DE)
(72) Erfinder: Hinter, Marco, 35767 Breidscheid (DE)
(74) Vertreter: Eisenführ Speiser

(56) Entgegenhaltungen:
- CH-A- 372 943
- DE-A1- 2 529 821
- DE-A1- 19 741 932
- DE-B1- 2 352 000
- DE-B1- 2 412 284
- DE-C1- 19 700 891
- DE-U1- 8 510 076
- US-A1- 2005 245 187

## Beschreibung

Die vorliegende Erfindung betrifft einen Vorrat an flexiblen Aufhängeelementen, wie Aufhängeschlaufen, zum Befestigen an wurstförmigen Verpackungseinheiten sowie eine Zuführvorrichtung zum Zuführen von flexiblen Aufhängeelementen.

Im Besonderen betrifft die vorliegende Erfindung einen Vorrat an flexiblen Aufhängeelementen, wie Aufhängeschlaufen, zum Befestigen an wurstförmigen Verpackungseinheiten. Der Vorrat beinhaltet ein Trägerband mit einer flachen Ober- und Unterseite, sowie auf der Oberseite des Trägerbandes mit ihrer Hauptlängsachse zumindest annähernd quer zur Längserstreckung des Trägerbandes mittels eines Haftmittels lösbar angeordnete flexible Aufhängeelemente. Diese sind mittels des Trägerbandes an einen Spendeort transportierbar, an dem ein in einer Spendeposition befindliches flexibles Aufhängeelement vom Trägerband abnehmbar ist.

Im Weiteren betrifft die vorliegende Erfindung eine Zuführvorrichtung zum Zuführen von flexiblen Aufhängeelementen, wie Aufhängeschlaufen, in eine Verpackungsmaschine, insbesondere in eine Clipmaschine, aus einem Vorrat an flexiblen Aufhängeelementen. Die Zuführeinrichtung enthält eine Aufnahme für den Vorrat an flexiblen Aufhängelementen und eine Führungseinrichtung zum Führen des Trägerbandes.

In der Praxis ist es bekannt, dass beispielsweise bei der Herstellung von Würsten das Wurstbrät von einer Füllmaschine über ein Füllrohr einer Clipmaschine zugeführt wird. In der Clipmaschine wird das Füllgut in ein durch einen ersten Clip einseitig verschlossenes, schlauchförmiges Verpackungsmaterial abgefüllt und durch Setzen eines zweiten Clips verschlossen. Wenn das wurstförmige Produkt bzw. das Wurstprodukt zur weiteren Verarbeitung aufgehängt werden soll, wird üblicherweise in den zweiten Clip ein Aufhängeelement, meist eine Fadenschlaufe, eingelegt und mit diesem zweiten Clip an dem Wurstprodukt befestigt. Anschließend werden die Wurstprodukte auf Speicherstangen aufgereiht, um weiterverarbeitet, beispielsweise geräuchert, zu werden.

Aus der DE-Offenlegungsschrift 10 2006 041 829 ist eine Fertigungslinie zur Herstellung von wurstförmigen Produkten bekannt, bei der die wurstförmigen Produkte in einem schlauchförmigen Verpackungshüllenmaterial ein fließfähiges Füllgut, wie Wurstbrät, Dichtmasse, Granulat und dgl. aufnehmen. Diese bekannte Fertigungslinie enthält eine Clipmaschine, in der das mit Füllgut befüllte Verpackungshüllenmaterial in einzelne wurstförmige Produkte durch Einschnüren der Verpackungshülle und Setzen von Verschlussclips im Bereich der Einschnürung portioniert wird, wobei beim Setzen der Verschlussclips mindestens ein flexibles Aufhängeelement an dem wurstförmigen Produkt angebracht werden kann, das der Clipmaschine getaktet zugeführt wird. Die Aufhängeelemente, die hier durch Fadenschlaufen gebildet sind, liegen dabei auf einem einseitig mit einem Kleber beschichteten Trägerband, von dem sie in der Clipmaschine einzeln durch eine nicht näher dargestellte Matrize eines Clipsetz- und Clipschließwerkzeugs abgezogen werden.

Es ist weiterhin bekannt, dass zur Kennzeichnung von Produkten, wie den oben genannten Wurstprodukten, diese mit einem Aufkleber oder Aufdrucken versehen werden. Desweiteren werden Etiketten, bspw. an die Aufhängeelemente angebracht. Diese können verschieden Informationen, wie Hersteller- oder Produktinformationen enthalten.

Aus dem DE-Patent 197 00 891 ist eine Anordnung von Aufhängeschlaufen bekannt. Die aus einem Schlaufenfaden bestehenden Aufhängeschlaufen sind nebeneinander auf einem Trägerband mittels eines Klebers gehalten und quer zu dessen Längsorientierung ausgerichtet. Die Aufhängeschlaufen sind derart auf dem Trägerband angeordnet, dass eine kleinere Teilschlaufe, die einen Knoten umfasst, mittels dem die freien Enden des Schlaufenfadens miteinander verbunden sind, auf einer Seite des Trägerbandes überstehen, während eine größere Teilschlaufe von der von der kleineren Teilschlaufe wegweisenden Seite des Trägerbandes absteht. Das Trägerband weist Löcher auf, deren Abstand mit dem Abstand der Aufhängeschlaufen auf dem Trägerband übereinstimmt, wobei sich die Löcher jeweils innerhalb einer Aufhängeschlaufe befinden.

Die DE-Patentanmeldung 197 41 932 offenbart ein Lebensmittel mit Schutzhülle und Siegelverschluss. Das wurstförmige Lebensmittel weist eine Schutzhülle auf, die endseitig durch Verschlussteile verschlossen ist. An einem Aufhängeband 5 des Lebensmittels ist ein Siegelverschluss angebracht, der dem Verbraucher deutlich machen soll, dass es sich vorliegend um ein hochwertiges Lebensmittel handelt. Der Siegelverschluss ist mit einer Schneidfläche, die sich über eine der Längskanten des Siegelverschlusses erstreckt und die dem Öffnen der Schutzhülle dient, versehen.

Das Dokument US 2005/245187 A1 offenbart eine Zuführvorrichtung zum Zuführen von flexiblen Aufhängeelementen, wie Aufhängeschlaufen, in eine Verpackungsmaschine, aus einem Vorrat an flexiblen Aufhängeelementen

Die Kennzeichnung der Produkte mit den vorstehend genannten, bekannten Aufdrucken oder Etiketten geschieht stets nach Fertigstellung des Produkts, was zu Fehlmanipulationen, wie Verwechslungen, und damit zu einer unrichtigen Kennzeichnung der Produkte führen kann. Desweiteren können die Aufdrucke und/oder Etiketten infolge eines weiteren Behandlungsschrittes der wurstförmigen Produkte, wie Räuchern oder Kochen, beschädigt werden oder Verblassen, sodass sie unleserlich werden. Sollte die Kennzeichnung erst nach einem oder mehreren weiteren Behandlungsschritten erfolgen, erhöht sich hierdurch die Gefahr von Fehlmanipulationen.

Es ist Aufgabe der vorliegenden Erfindung, einen Vorrat an flexiblen Aufhängeelementen sowie eine Zuführvorrichtung für die Aufhängeelemente zum Zuführen von flexiblen Aufhängeelementen in eine Verpackungsmaschine, insbesondere in eine Clipmaschine, der eingangs genannten Art bereit zu stellen, die die genannten Nachteile überwindet und die Herstellung wurstförmiger Produkte prozesssicherer gestaltet.

Die vorstehende Aufgabe bezüglich des Vorrats an flexiblen Aufhängeelementen wird durch die Merkmale des Anspruchs 1 gelöst. In den sich daran abschließenden Ansprüchen 2 bis 14 finden sich vorteilhafte Ausgestaltungen hierzu. Die vorstehend genannte Aufgabe bezüglich der Zuführeinrichtung für die Aufhängeelemente wird durch die Merkmale des Anspruchs 15 gelöst. In dem sich daran abschließenden Anspruch 16 finden sich vorteilhafte Ausgestaltung.

Zur Lösung dieser Aufgabe wird Vorrat an flexiblen Aufhängeelementen, wie Aufhängeschlaufen, zum Befestigen an wurstförmigen Verpackungseinheiten vorgeschlagen. Der Vorrat an flexiblen Aufhängeelementen enthält ein Trägerband mit einer flachen Ober- und Unterseite, sowie auf der Oberseite des Trägerbandes mit ihrer Hauptlängsachse zumindest annähernd quer zur Längserstreckung des Trägerbandes mittels eines Haftmittels lösbar angeordnete flexible Aufhängeelemente. Diese sind mittels des Trägerbandes an einen Spendeort transportierbar, an dem ein in einer Spendeposition befindliches flexibles Aufhängeelement vom Trägerband abnehmbar ist.

In einer vorteilhaften Ausgestaltung des erfindungsgemäßen Vorrats an flexiblen Aufhängeelementen weist jedes der auf dem Trägerband angeodneten flexiblen Aufhängeelemente eine Plombe auf. Eine solche, fest mit dem jeweiligen flexiblen Aufhängeelement des Vorrats an flexiblen Aufhängeelementen verbundene Plombe wird unmittelbar und unverwechselbar zusammen mit dem flexiblen Aufhängeelement an der wurstförmigen Verpackungseinheit angebracht. Daher entfällt der Arbeitsschritt eines nachträglichen Anbringens einer Plombe. Weiterhin wird eine mögliche Quelle für Fehlmanipulationen ausgeschaltet.

Vorteilhafterweise ist die Plombe im Bereich eines Endes des flexiblen Aufhängeelements angebracht. Dieses Ende ist bevorzugt das von der wurstförmigen Verpackungseinheit entfernte Ende des flexiblen Aufhängeelements, um das Anbringen des Aufhängeelements an der Verpackungseinheit nicht zu behindern.

In einer weiterhin vorteilhaften Ausgestaltung des erfindungsgemäßen Vorrats an flexiblen Aufhängeelementen sind die flexiblen Aufhängeelemente derart auf dem Trägerband angeordnet, dass die an den flexiblen Aufhängeelementen angeordneten Plomben zur gleichen Seitenkante des Trägerbandes weisen, wodurch ein gleichmäßiges Entnehmen der Aufhängeelemente am Spendeort ermöglicht wird.

In einer erfindungsgemäßen Ausführung liegen die flexiblen Aufhängeelemente mittig auf dem Trägerband auf, wodurch diese das Trägerband auf seinen beiden Seiten um die gleiche Länge überragen. Es kann aber ebenfalls gewünscht sein, dass die flexiblen Aufhängeelemente asymmetrisch, entlang ihrer Hauptlängsachse verschoben auf dem Trägerband aufliegen, bspw. um ein Ungleichgewicht durch die an den Aufhängeelementen angebrachten Plomben auszugleichen und so ein einseitiges Herabhängen und damit eventuell verbundene Störungen zu verhindern. In einer weiteren Ausführung ist es möglich, dass die Plombe auf dem Trägerband aufliegt.

Um einen sicheren Halt der mit einer Plombe versehenen flexiblen Aufhängeelemente auf dem Trägerband zu gewährleisten, und um ein Reißen des Trägerbandes zu verhindern kann vorgesehen sein, dass die Breite des Trägerbandes wenigstens einem Viertel der Länge der flexiblen Aufhängeelemente entspricht. Entsprechend kann weiterhin vorgesehen sein, dass die Dicke des Trägerbandes der Dicke des Schlaufenmaterials entspricht. Darüberhinaus sollte die Dicke des Trägerbandes mit der Größe und/oder dem Gewicht der Plombe korrespondieren.

Erfindungsgemäß ist vorgesehen, dass auf der Plombe Informationen speicherbar sind. Mittels solcher Informationen ist jedes der Verpackungsprodukte siche und individuell identifizierbar. Solche Informationen Hersteller und/oder Produktinformationen sein, wie Herstellungsdatum, Inhaltsstoffe, Hersteller, Herstellverfahren u.Ä.

Zum Aufbringen der gewünschten Informationen kann die Plombe beschreibbar sein. Alternativ ist es möglich, dass die Plombe bedruckbar ist.

Entsprechend der Erfindung enthält die Plombe ein elektronisch lesbares und/oder beschreibbares Element. Mittels solcher elektronisch lesbarer und/oder beschreibbarer Elemente ist ein berührungsloses Kennzeichnen und Identifizieren der Verpackungsprodukte möglich, was auch unter hygienischen Gesichtspunkten vorteilhaft ist. Das elektronisch lesbare und/oder beschreibbare Element ist ein RFID-Chip.

Um einen Verlust der Plombe oder Manipulationen an der Plombe zu verhindern kann vorgesehen sein, dass die Plombe so mit dem flexiblen Aufhängeelementen verbunden ist, dass diese nicht zerstörungsfrei von dem flexiblen Aufhängeelementen gelöst werden kann.

Ist die Plombe an dem flexiblen Aufhängeelementen angebördelt, kann eine solche, vorstehend erwähnte unlösbare Verbindung zwischen Plombe und Aufhängeelement erreicht werden. Selbstverständlich sind andere unlösbare Verbindungen zwischen Plombe und Aufhängeelement möglich, wie bspw. Verschweißen oder Verkleben.

Zur Lösung der eingangs genannten Aufgabenstellung wird weiterhin eine Zuführvorrichtung vorgeschlagen, zum Zuführen von flexiblen Aufhängeelementen, wie Aufhängeschlaufen, in eine Verpackungsmaschine, insbesondere in eine Clipmaschine, aus einem Vorrat an flexiblen Aufhängeelementen. Die Zuführeinrichtung enthält neben anderen Elementen eine Aufnahme für den Vorrat an flexiblen Aufhängelementen und eine Führungseinrichtung zum Führen des Trägerbandes.

Erfindungsgemäß weist die Führungseinrichtung ein Abstützelement zum zumindest teilweisen Abstützen der mit der Plombe versehenen, flexiblen Aufhängeelemente auf. Dadurch wird ein durch das Gewicht der Plomben verursachtes einseitiges Herabhängen der Aufhängeelemente von der Führungseinrichtung unterbunden und ein mögliches Verhaken des herabhängenden Endes der Aufhängeelemente mit anderen Maschinenteilen verhindert.

Weiterhin erfindungsgemäß kann vorgesehen sein, dass die Aufnahme für den Vorrat an flexiblen Aufhängelementen ein Abstützelement zum zumindest teilweisen Abstützen der mit der Plombe versehenen, flexiblen Aufhängeelemente aufweist. Hierdurch kann verhindert werden, dass sich die Aufhängeelemente bzw. deren mit einer Plombe versehenen Enden im Vorrat ineinander verfangen.

Weitere vorteilhafte Ausgestaltungen sowie ein Ausführungsbeispiel der Erfindung werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1:: eine perspektivische Ansicht einer ersten Ausführung eines erfindungsgemäßen Vorrats an flexiblen Aufhängelementen;
- Fig. 2:: eine perspektivische Ansicht einer weiteren Ausführung eines erfindungsgemäßen Vorrats an flexiblen Aufhängelementen; und
- Fig. 3:: eine perspektivische Ansicht einer erfindungsgemäßen Zuführeinrichtung.

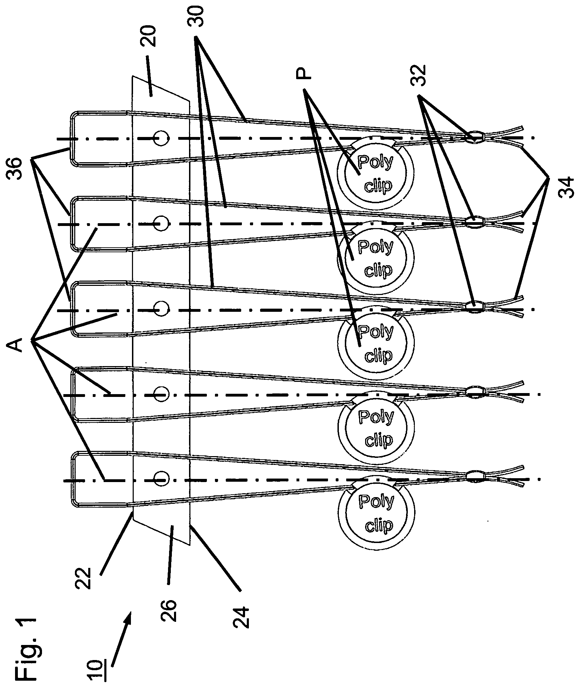

Figur 1 zeigt eine perspektivische Ansicht einer ersten Ausführung eines erfindungsgemäßen Vorrats an flexiblen Aufhängelementen. Der Vorrat 10 weist ein Trägerband 20 sowie hierauf angeordnete flexible Aufhängeelemente oder Schlaufen 30 auf.

Der in Fig. 1 gezeigte und sich in seiner Längsrichtung horizontal erstreckende Abschnitt des Trägerbandes 20 weist zwei Längskanten 22, 24 auf. Auf seiner Oberseite 26 sind flexible Aufhängeelemente in Form von Schlaufen 30 angebracht. Die Schlaufen 30 bestehen aus einem fadenförmigen Element, wie beispielsweise einem Bindfaden aus Textilmaterial oder Kunststoff, das im Bereich seiner Enden miteinander verbunden ist, z.B. durch einen Knoten 32. Die Schlaufe 30 weisen eine Symmetrielinie oder Längsachse A auf, die durch die Enden 34, 36 der Schlaufe 30 verläuft, wobei das erste Ende 34 durch die Enden des fadenförmigen Elements gebildet wird, wogegen das zweite Ende 36 durch den bei der Schlaufenbildung entstandenen und dem ersten Ende 34 gegenüberliegenden Bogen in dem fadenförmigen Element gebildet ist.

Wie Fig. 1 entnehmbar ist, sind die Schlaufen 30 so auf dem Trägerband 20 angeordnet, dass die Längsachse A der Schlaufen 30 senkrecht zu den Seitenkanten 22, 24 des Trägerbandes 20 ausgerichtet ist. Die Schlaufen 30 liegen flach auf dem Trägerband auf und weisen einen regelmäßigen Abstand zueinander auf. Die Oberseite 26 des Trägerbandes 20 ist zumindest in dem Bereich, in welchem die Schlaufen 30 auf diesem aufliegen mit einem Haftmittel beschichtet. Dadurch werden die Schlaufen 30 in ihrer Position fixiert. Das Haftmittel weist dabei eine solche Haftkraft auf, dass die Schlaufen 30 beim Aufwickeln des mit Schlaufen 30 versehenen Trägerbandes 20 zu einer Vorratsrolle und beim Abwickeln des Trägerbandes 20 von dem Vorrat 10 auf dem Trägerband 20 gehalten werden.

Wie weiterhin in Fig. 1 zu sehen, sind an den auf dem Trägerband 20 fixierten Schlaufen 30 Plomben P angebracht. Jede der Schlaufen 30 weist eine Plombe P auf, die in der Nähe des Knotens 32 an dem Fadenmaterial der Schlaufe 30, genauer an einem der beiden zu dem Knoten 32 führenden Fäden befestigt ist. Die Plombe P kann als Informationsträger dienen. Hierzu die Plombe P beispielsweise mit einem Aufdruck versehen sein. Auf der in Fig. 1 zu sehenden Oberfläche oder Oberseite der Plombe P ist beispielhaft der Buchstabe "P" abgebildet. Es können selbstverständlich beliebige Informationen, wie Hersteller- oder Produktinformationen, auf die Plombe P aufgebracht werden. Hierzu kann die Plombe vor dem Anbringen an die Schlaufe 30 bedruckt oder beschrieben werden. Das Aufbringen der Informationen auf die Plombe kann aber auch nach der Konfektionierung der mit einer Plombe P versehenen Schlaufen 30 zum Vorrat 10 erfolgen.

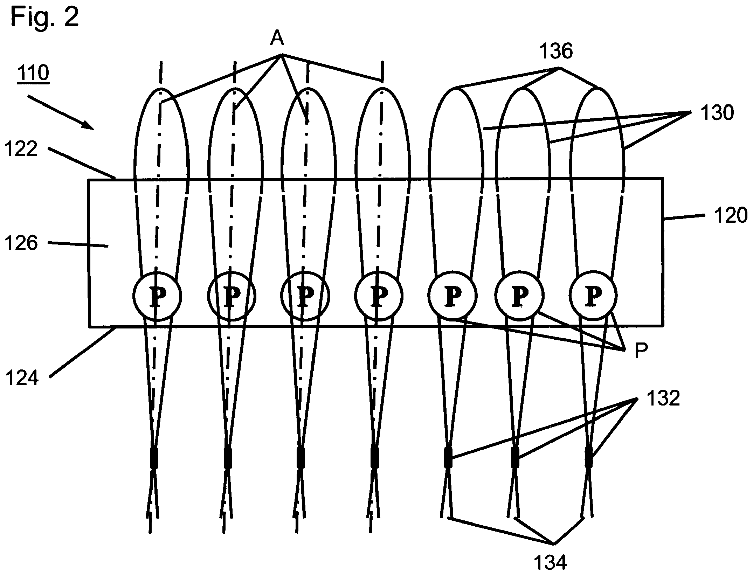

Fig. 2 zeigt ein weiteres Ausführungsbeispiel eines erfindungsgemäßen Vorrats 110 an flexiblen Aufhängelementen oder Schlaufen 130. Die Schlaufe 130 sind identisch zu den Schlaufen 30 gemäß Fig. 1 und sind in identischer Weise auf einem Trägerband 120 angeordnet. Auch die Schlaufen 130 mit ersten und zweiten Enden 134, 136 weisen eine Längsachse A auf und sind mit dieser senkrecht zu den Seitenkanten 122, 124 des Trägerbandes 120 ausgerichtet. Dabei ragt das erste Ende 134 über die Längskante 124 und das zweite Ende über die Längskante 122 des Trägerbandes 120.

Im Gegensatz zum Ausführungsbeispiel gemäß Fig. 1 ist die Plombe P jeder Schlaufe 130 an beiden zu dem Knoten 132 der Schlaufe 130 führenden Fäden befestigt. Weiterhin ist das Trägerband 120 des Vorrats 110 an Schlaufen 130 so breit gewählt, dass auch die Plomben P auf dem Trägerband 130 aufliegen und durch das auf der Oberseite 126 des Trägerbandes 130 aufgebrachte Haftmittel fixiert werden.

Selbstverständlich können die Schlaufen 130 auch dem schmaleren Trägerband 20 angebracht sein, wie auch die Schlaufen 30 auf dem breiteren Trägerband 120 angeordnet sein können.

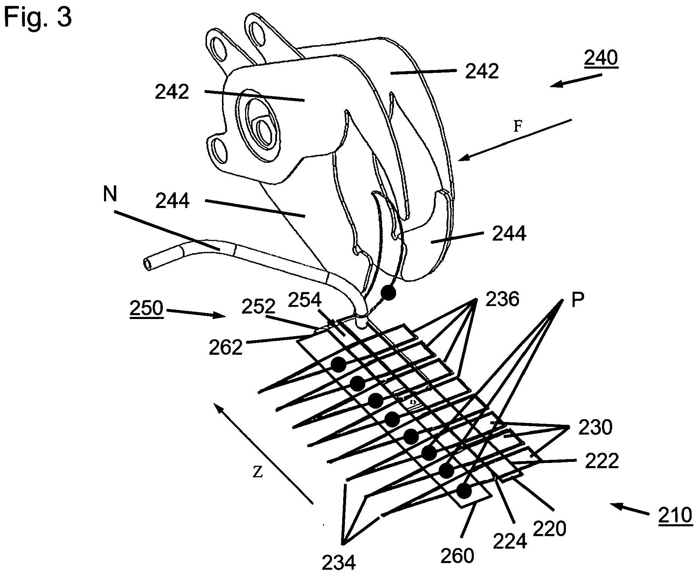

Fig. 3 zeigt eine perspektivische Ansicht einer erfindungsgemäßen Zuführeinrichtung 250 in einer nur teilweise dargestellten und an sich bekannten Clipmaschine zur Herstellung wurstförmiger Verpackungseinheiten. Diese bekannte Clipmaschine weist eine Verdrängerbaugruppe 240 auf, bestehend aus einem ersten und einem zweiten Paar Verdrängerscheren 242, 244 und 246, 248, die parallel zueinander ausgerichtet und um eine gemeinsame, nicht näherbezeichnete Achse zwischen einer Freigabeposition und einer Einschnürposition senkrecht zur Füllausstoßrichtung F reversibel verschwenkbar sind.

Die Clipmaschine weist weiterhin eine Fangeinrichtung für die an den wurstförmigen Verpackungseinheiten, wie Wurstprodukten, anbringbaren Schlaufen 230 auf. Von dieser Fangvorrichtung ist in Fig. 1 lediglich die Fängernadel N dargestellt. Diese reicht mit ihrem freien, in der Darstellung rechten Ende in den Verschließbereich der Clipmaschine. An ihrem, in Fig. 1 linken Ende schließt sich eine nicht dargestellte Transportvorrichtung an, wie bspw. eine Förderschnecke, um die an den Schlaufen 230, erfassten Wurstprodukte aus der Clipmaschine auszutragen.

Fig. 3 zeigt weiterhin die erfindungsgemäße Zuführvorrichtung 250 zum Zuführen der an dem Wurstprodukt anzubringenden Aufhängeelemente oder Schlaufen 230 in Zuführrichtung Z, senkrecht zur Füllausstoßrichtung F.

Von der Zuführeinrichtung 250 ist in Fig. 3 lediglich das Führungselement 252 gezeigt, das mittels eines nicht dargestellten Halteelements, wie einem Bolzen o.Ä., an einem Rahmenelement der Zuführeinrichtung 250 oder der Clipmaschine befestigt ist. Das Führungselement 252 wiest eine annähernd horizontal ausgerichtete Führungsfläche 254 auf, über das das Trägerband 220 mit den darauf angebrachten Schlaufen 230 in Zuführrichtung Z in den Verschließbereich der Clipmaschine geführt wird.

Das Trägerband 220 mit den darauf angeordneten Schlaufen 230 ist so ausgerichtet, dass dessen Längskante 222 bzw. die darüber hinaus ragenden zweiten Enden 236 der Schlaufen 230 in Richtung des Verschließbereichs der Clipmaschine, also entgegen gesetzt der Füllausstoßrichtung F weisen. Entsprechend überragen die ersten Enden 234 der Schlaufen 230 die Längskante 224 des Trägerbandes 220 in Füllausstoßrichtung F.

Die erfindungsgemäße Zuführeinrichtung 250 weist weiterhin ein Abstützelement 260 auf. Dieses ist gemäß Fig. 3 durch ein rechteckiges Flachelement gebildet, das horizontal zur Führungsfläche 254 ausgerichtet und in Füllausstoßrichtung F neben diesem angeordnet ist. Das Abstützelement 260 schließt mit seiner zur Clipmaschine gerichteten Vorderkante mit der Vorderkante der Führungsfläche 254 ab und bildet so eine Verbreiterung der Führungsfläche in Richtung der Füllausstoßrichtung F. Die hintere, von der Clipmaschine weg weisende Kante 264 des Abstützelements 260 reicht zumindest annähernd bis zu dem zu einer Vorratsrolle aufgewickelten Vorrat 210 an auf dem Trägerband 220 fixierten Schlaufen 230. Die Breite des abstützelements 260 ist dabei so gewählt, dass zumindest die an den Schlaufen 230 angebrachten Plomben P auf diesem aufliegen.

Bei der Herstellung von wurstförmigen Verpackungseinheiten wie beispielsweise Würsten, wird in bekannter Weise zunächst das Wurstbrät von einer Füllmaschine über ein Füllrohr in eine zu befüllende, bereits einseitig mittels eines ersten Clips verschlossene schlauchförmige Verpackungshülle gefördert, die hierzu auf dem Füllrohr gespeichert ist und beim Füllen durch den Fülldruck von diesem abgezogen wird. Die Verdrängerscheren 242, 244, 246, 248 befinden sich bei diesem Füllvorgang in einer geöffneten Position oder Freigabeposition, wie sie in der Fig. 3 dargestellt ist. Ist eine vorbestimmte oder gewünschte Menge Wurstbrät in die schlauchförmige Verpackungshülle gefüllt, werden die Verdrängerscheren 242, 244, 246, 248 in ebenfalls bekannter Weise in die Einschnürposition bewegt, d.h., sie fahren paarweise radial aufeinander zu. Anschließend werden die Verdrängerscherenpaare 242, 244, 246, 248 in axialer Richtung auseinander gefahren, wodurch ein füllgutfreier Zopf gebildet wird, auf den zum Verschließen der eben gefüllten schlauchförmige Verpackungshülle durch radiales Aufeinanderzubewegen der Verschließwerkzeuge, üblicher Weise als Stempel und Matrize ausgeführt, wenigstens ein weiterer Clip gesetzt wird. In ihrer Aufwärtsbewegung, d.h. in ihrer Bewegung in Richtung der Zopfachse, fädelt die Matrize als unteres Verschließwerkzeug bzw. der in der Matrize befindliche Clip in das vom Trägerband 220 überstehende Ende 236 der sich am Spendeort befindendlichen Schlaufe 230 ein. Dabei wird die Schlaufe S vom Trägerband 220 gezogen.

Währenddessen wird das vom Verschlussclip weg weisende Ende 236 der Schlaufe 230 auf die Fängernadel N überführt. Die Schlaufe 230 ist jetzt mit ihrem oberen Ende mittels des Verschlussclips an dem Wurstprodukt befestigt und mit ihrem unteren Ende 234 auf die Fängernadel N der Fangvorrichtung aufgezogen. Die Verdrängerscherenpaare 242, 244, 246, 248 sowie die Verschließwerkzeuge fahren von ihrer Einschnür- bzw. Verschließposition wieder auseinander in ihre Freigabeposition. Die fertig verpackte wurstförmige Verpackungseinheit oder Wurst wird in Füllausstoßrichtung F stromabwärts aus der Clipmaschine ausgetragen, nachdem es vom übrigen Vorrat an Verpackungshüllenmaterial getrennt worden ist.

Nachdem die am Spendeort befindliche Schlaufe 230 an der Wurst angebracht wurde, wird das Trägerband 220 in Zuführrichtung Z weitertransportiert, um eine Länge, die dem Abstand zwischen zwei benachbart auf dem Trägerband 220 angeordneter Schlaufen 230 entspricht. Hierdurch wird die nächste Schlaufe 230 zum Spendeort transportiert und zur Befestigung an der nächsten zu fertigenden Wurst bereitgehalten.

Bei der Bewegung des Trägerbandes 220 in Zuführrichtung Z wird weiteres Trägerband 220 mit daran befestigten Schlaufen 230 von dem zu einer Vorratsrolle aufgewickelten Vorrat 210 an Schlaufen 230 abgewickelt. Das Abstützelement 260 ist so ausgerichtet, dass die an den Schlaufen 230 angebrachten Plomben P zumindest annähernd ab dem Zeitpunkt, indem das Trägerband 230 beim Abziehen von der Vorratsrolle in die horizontale Zuführrichtung übergeht, von diesem abgestützt werden. Hierdurch wird verhindert, dass das Ende 234 der Schlaufe 230 durch das Gewicht der Plombe P von der Führungsfläche 254 nach unten herunterhängt und sich in Maschinenteilen verhakt. Desweiteren kann so eine Beschädigung der Plombe P bzw. der darauf befindlichen Informationen verhindert werden.

Die Schlaufen 30, 130, 230 können symmetrisch, mittig auf den Trägerband 20, 120, 220 angebracht sein. Zum Ausgleich des Gewichts der an den Schlaufen 30, 130, 230 angebrachten Plomben P kann es aber sinnvoll sein, die Schlaufen 30, 130, 230 asymmetrisch auf dem Trägerband 20, 120, 220 angeordnet sein. Im Fall des breiteren Trägerbandes 120, bei dem die Plombe P auf diesem aufliegt, kann eine symmetrische Anordnung beibehalten werden.

Die Schlaufen 30, 130, 230 ein und desselben Vorrats sind in einem regelmäßigen und stets gleichen Abstand zueinander auf dem Trägerband 20, 120, 220 angeordnet. Hierdurch bleibt auch der Vorschubweg zum Transport einer Schlaufe 30, 130, 230 an den Spendeort für das Trägerband 20, 120, 220 stets gleich, wodurch die Steuerung der Zuführungvorrichtung vereinfacht wird.

Je nach Art und Größe der an den Schlaufen 30, 130, 230 angebrachten Plomben P kann es jedoch sinnvoll oder notwendig sein, dass die Schlaufen 30, 130, 230 einen gleichmäßigen jedoch, bspw. bei sehr großen Plomben P, einen größeren Abstand aufweisen. Dadurch muss bei einem Wechsel des Vorrats an Schlaufen 30, 130, 230 auf einen korrekt eingestellten Vorschubweg geachtet werden.

Da die Plombe P einen RFID-Chip enthält, ist es möglich, dass diese information in dem RFID-Chip enthalten ist. Diese kann dann von einer entsprechenden und mit der Steuerung der Clipmaschine oder der Schlaufenzuführung verbundenen Leseeinrichtung ausgelesen und an die entsprechende Steuerung übermittelt wird, die dann automatisch den korrekten Vorschubweg einstellt. Ist die Leseeinrichtung in unmittelbarer Nähe des Spendeorts angebracht, kann der entsprechende Abstand zweier Schlaufen online, also unmittelbar vor dem Weitertransport zum Spendeort eingestellt werden. Dadurch ist es möglich, die Schlaufen in einem annähernd beliebigen Abstand auf dem Trägerband anzuordnen, wenn dieser Abstand in dem jeweiligen RFID-Chip der entsprechenden Schlaufe gespeichert ist.

Das Trägerband 20, 120, 220 sollte eine an die Länge der Schlaufen 30, 130, 230 angepasste Breite aufweisen, um ein seitliches Herunterhängen der Schlaufen 30, 130, 230, vor allem des mit der Plombe P versehenen ersten Endes 34, 134, 234 vom Trägerband 20, 120, 220 zu vermeiden. Die Breite des Trägerbandes 20, 120, 220 sollte dabei etwa einem Viertel der Länge der Schlaufe 30, 130, 230 entsprechen. Selbstverständlich ist hierbei auch das Gewicht der Plombe P sowie die Stärke des Fadenmaterials und dessen Gewicht zu beachten, sodass die Breite des Trägerbandes 20, 120, 220 von der oben vorgeschlagenen Breite abweichen kann.

Die Plombe P wurde vorstehend als beschreibbar oder bedruckbar beschrieben. Hierzu kann ein entsprechender Abschnitt auf der Plombe P vorgesehen sein, oder die Plombe P kann komplett aus beschreib- oder bedruckbarem Material bestehen, wobei es sich um Papier, Pappe oder einen geeigneten Kunststoff handeln kann. Informationen, wie Herstellersiegel o.Ä. können aber auch in die Plombenoberfläche eingeprägt sein. In diesem Fall muss die Plombe P ein prägefähiges Material aufweisen.

Erfindungsgemäß enthält die Plombe ein elektronisch lesbares und/oder beschreibbares Element wie einen RFID-Chip. Auf dieses Element können berührungsfrei Informationen ein gelesen und z.B. zu Kontrollzwecken ausgelesen werden.

Auf einem solchen Element oder RFID-Chip können sehr viele Informationen gespeichert werden. Zudem können diese Informationen nicht visuell ausgelesen werden. Dadurch ist es möglich, Informationen zu speichern, die nicht für jedermann ersichtlich sein sollen oder müssen, wie spezielle Herstellungsverfahren oder -schritte. Andererseits erlaubt die Menge an verfügbaren Daten eine lückenlose Nachverfolgung der so gekennzeichneten Produkte bzw. deren Inhaltsstoffe.

Bei Einbringen eines solchen Chips in eine Plombe P sollte ein nachfolgender Prägevorgang vermieden werden, oder es sollte sichergestellt werden, dass der Chip beim Prägen nicht beschädigt wird.

Das an der erfindungsgemäßen Zuführeinrichtung 250 angebrachte Abstützelement 260 kann auch jede andere als die beschriebene Rechteckform haben, beispielsweise kann sie abgerundete ecken aufweisen, um Beschädigungen der Schlaufen 30, 130, 230 zu vermeiden.

Weiterhin kann ein Abstützelement an der Vorratsrolle vorgesehen sein, die die Schlaufen während des Abrollens des Trägerbandes so abstützt, dass sich diese nicht ineinander verfangen.

Das Abstützelement 260 kann aber auch so ausgeformt sein, dass es einstückig mit dem Abstützelement an der Vorratsrolle verbunden ist bzw. ein einziges Abstützelement beide Abstützfunktionen übernimmt.

Beim Abziehen der am Spendeort auf dem Trägerband 20, 120, 220 bereitgestellten Schlaufe 30, 130, 230 ist es möglich, dass diese herumwirbelt und sich mit Maschinenteilen oder der benachbarten Schlaufe verhakt. Um dies zu verhindern kann ein Abdeckelement vorgesehen sein, das zumindest die am Spendeort vorgehaltene Schlaufe 30, 130, 230 abdeckt. Das Abdeckelement kann im einfachsten Fall ein parallel über dem Abstützelement 260 fest angeordnetes Flachelement sein. Es ist ebenfalls möglich, dass das Abdeckelement schenkbar ausgeführt ist, sodass es während des Abziehens der Schlaufe 30, 130, 230 auf dieser bzw. auf dem Trägerband aufliegt, während des Transports der nächsten Schlaufe an den Spendeort jedoch vom Trägerband abgehoben ist.

Um einem Verlust der Plombe P vorzubeugen sollte diese unlösbar mit der Schlaufe 30, 130, 230 verbunden sein, bspw. durch eine Bordelung, eine Verschweißung oder durch Verkleben. Im Fall einer Plombe P mit einem darin integrierten RFID-Chip kann es aber auch sinnvoll sein, eine lösbare Verbindung zwischen Plombe P und Schlaufe 30, 130, 230 vorzusehen, wie eine lösbare Klemmverbindung. Hierdurch ist eine Wiederverwendung der Plomben P durch erneutes Beschreiben mit aktualisierten Informationen möglich.

Der erfindungsgemäße Vorrat 10, 110, 210 an Schlaufen 30, 130, 230 mit daran angebrachten Plomben P kann natürlich auch an jeder anderen als der in Fig. 3 gezeigten Clipmaschine verwendet werden, wie beispielsweise bei Clipmaschinen mit Linearverdrängern oder Irisverdrängern.

## Patentansprüche

1. Vorrat an flexiblen Aufhängeelementen, wie Aufhängeschlaufen, zum Befestigen an wurstförmigen Verpackungseinheiten, enthaltend:
ein Trägerband (20, 120, 220) mit einer flachen Ober- und Unterseite sowie mehreren auf der Oberseite (26, 126, 226) des Trägerbandes (20, 120, 220) mit ihrer Hauptlängsachse (A) zumindest annähernd quer zur Längserstreckung des Trägerbandes (20, 120, 220) mittels eines Haftmittels lösbar angeordneten flexiblen Aufhängeelementen (30, 130, 230), welche mittels des Trägerbandes (20, 120, 220) an einen Spendeort transportierbar sind, an dem ein in einer Spendeposition befindliches flexibles Aufhängeelement (30, 130, 230) vom Trägerband (20, 120, 220) abnehmbar ist,
**dadurch gekennzeichnet, dass** jedes der auf dem Trägerband (20, 120, 220) angeordneten flexiblen Aufhängeelemente (30, 130, 230) eine Plombe (P) aufweist, dass die Plombe (P) ein lesbares und/oder beschreibbares Element enthält, und dass das elektronisch lesbare und/oder beschreibbare Element ein RFID-Chip ist.

2. Vorrat nach Anspruch 1,
**dadurch gekennzeichnet, dass** die Plombe (P) im Bereich eines Endes (34, 134, 234) des flexiblen Aufhängeelements (30, 130, 230) angebracht ist.

3. Vorrat nach Anspruch 1 oder 2,
**dadurch gekennzeichnet, dass** die flexiblen Aufhängeelemente (30, 130, 230) derart auf dem Trägerband (20, 120, 220) angeordnet sind, dass die an den flexiblen Aufhängeelementen (30, 130, 230) angeordneten Plomben (P) zur gleichen Seitenkante (24, 124, 224) des Trägerbandes (20, 120, 220) weisen.

4. Vorrat nach Anspruch 3,
**dadurch gekennzeichnet, dass** die flexiblen Aufhängeelemente (30, 130, 230) mittig auf dem Trägerband (20, 120, 220) aufliegen.

5. Vorrat nach Anspruch 3,
**dadurch gekennzeichnet, dass** die flexiblen Aufhängeelemente (30, 130, 230) asymmetrisch, entlang ihrer Hauptlängsachse (A) verschoben auf dem Trägerband (20, 120, 220) aufliegen.

6. Vorrat nach einem der Ansprüche 1 bis 5,
**dadurch gekennzeichnet, dass** die Breite des Trägerbandes (20, 120, 220) wenigstens einem Viertel der Länge der flexiblen Aufhängeelemente (30, 130, 230) entspricht.

7. Vorrat nach einem der Ansprüche 1 bis 6,
**dadurch gekennzeichnet, dass** die Dicke des Trägerbandes (20, 120, 220) der Dicke des Schlaufenmaterials entspricht.

8. Vorrat nach einem der Ansprüche 1 bis 6,
**dadurch gekennzeichnet, dass** die Dicke des Trägerbandes (20, 120, 220) mit der Größe und/oder dem Gewicht der Plombe korrespondiert.

9. Vorrat nach einem der Ansprüche 1 bis 8,
**dadurch gekennzeichnet, dass** auf der Plombe (P) Informationen speicherbar sind.

10. Vorrat nach Anspruch 9,
**dadurch gekennzeichnet, dass** die Informationen Hersteller und/oder Produktinformationen sind.

11. Vorrat nach einem der Ansprüche 1 bis 10,
**dadurch gekennzeichnet, dass** die Plombe (P) beschreibbar ist.

12. Vorrat nach einem der Ansprüche 1 bis 10,
**dadurch gekennzeichnet, dass** die Plombe (P) bedruckbar ist.

13. Vorrat nach einem der Ansprüche 1 bis 12,
**dadurch gekennzeichnet, dass** die Plombe (P) so mit dem flexiblen Aufhängeelement (30, 130, 230) verbunden ist, dass diese nicht zerstörungsfrei von dem flexiblen Aufhängeelement (30, 130, 230) gelöst werden kann.

14. Vorrat nach einem der Ansprüche 1 bis 13,
**dadurch gekennzeichnet, dass** die Plombe (P) an dem flexiblen Aufhängeelement (30, 130, 230) angebördelt ist.

15. Zuführvorrichtung zum Zuführen von flexiblen Aufhängeelementen (30, 130, 230), wie Aufhängeschlaufen, in eine Verpackungsmaschine, insbesondere in eine Clipmaschine, aus einem Vorrat (10, 110, 210) an flexiblen Aufhängeelementen (30, 130, 230) nach einem der Ansprüche 1 bis 8, enthaltend:
eine Aufnahme für den Vorrat (10, 110, 210) an flexiblen Aufhängelementen (30, 130, 230) und eine Führungseinrichtung (250) zum Führen des Trägerbandes (20, 120, 220),
**dadurch gekennzeichnet, dass** die Führungseinrichtung (250) ein Abstützelement (260) zum zumindest teilweisen Abstützen der mit der Plombe (P) versehenen, flexiblen Aufhängeelemente (30, 130, 230) aufweist.

16. Zuführvorrichtung nach Anspruch 15,
**dadurch gekennzeichnet, dass** die Aufnahme für den Vorrat (10, 110, 210) an flexiblen Aufhängelementen (30, 130, 230) ein Abstützelement zum zumindest teilweisen Abstützen der mit der Plombe versehenen, flexiblen Aufhängeelemente (30, 130, 230) aufweist.

## Claims

1. A supply of flexible suspension elements, such as suspension loops, for attaching to sausage-shaped packaging units, said supply comprising:
a carrier strip (20, 120, 220) having a flat upper side and underside and a plurality of flexible suspension elements (30, 130, 230) detachably disposed by means of an adhesive on the upper side (26, 126, 226) of the carrier strip (20, 120, 220) with their main longitudinal axis (A) at least approximately transverse to the longitudinal extension of the carrier strip (20, 120, 220), wherein said suspension elements may be conveyed by means of the carrier strip (20, 120, 220) to a delivery point at which a suspension element (30, 130, 230) in a delivery position may be removed from the carrier strip (20, 120, 220),
**characterised in that** each of the flexible suspension elements (30, 130, 230) disposed on the carrier strip (20, 120, 220) has an anti-tamper seal (P), that said anti-tamper seal (P) contains a readable and/or writeable element, and that said electronically readable and/or writeable element is an RFID chip.

2. The supply according to claim 1,
**characterised in that** the anti-tamper seal (P) is attached in the region of one end (34, 134, 234) of the flexible suspension element (30, 130, 230).

3. The supply according to claim 1 or 2,
**characterised in that** the flexible suspension elements (30, 130, 230) are disposed on the carrier strip (20, 120, 220) in such a way that the anti-tamper seals (P) disposed on the flexible suspension elements (30, 130, 230) face towards the same side edge (24, 124, 224) of the carrier strip (20, 120, 220).

4. The supply according to claim 3,
**characterised in that** the flexible suspension elements (30, 130, 230) lie with their middle portion on the carrier strip (20, 120, 220).

5. The supply according to claim 3,
**characterised in that** the flexible suspension elements (30, 130, 230) lie asymmetrically displaced along their main longitudinal axis (A) on the carrier strip (20, 120, 220).

6. The supply according to any one of claims 1 to 5,
**characterised in that** the width of the carrier band (20, 120, 220) is equal to at least one quarter of the length of the flexible suspension elements (30, 130, 230).

7. The supply according to any one of claims 1 to 6,
**characterised in that** the thickness of the carrier strip (20, 120, 220) corresponds to the thickness of the loop material.

8. The supply according to any one of claims 1 to 6,
**characterised in that** the thickness of the carrier strip (20, 120, 220) corresponds to the size and/or the weight of the anti-tamper seal.

9. The supply according to any one of claims 1 to 8,
**characterised in that** information can be stored on the anti-tamper seal (P).

10. The supply according to claim 9,
**characterised in that** the information is producer and/or product information.

11. The supply according to any one of claims 1 to 10,
**characterised in that** the anti-tamper seal (P) is writeable.

12. The supply according to any one of claims 1 and 10,
**characterised in that** the anti-tamper seal (P) can be printed on.

13. The supply according to any one of claims 1 to 12,
**characterised in that** the anti-tamper seal (P) is connected to the flexible suspension element (30, 130, 230) in such a way that it cannot be disconnected from the flexible suspension element (30, 130, 230) non-destructively.

14. The supply according to any one of claims 1 to 13,
**characterised in that** the anti-tamper seal (P) is crimped onto the flexible suspension element (30, 130, 230).

15. A feeding device for feeding flexible suspension elements (30, 130, 230), such as suspension loops, into a packaging machine, in particular into a clipping machine, from a supply (10, 110, 210) of flexible suspension elements (30, 130, 230) according to any one of claims 1 to 8, said feeding device containing:
a receptacle for the supply (10, 110, 210) of flexible suspension elements (30, 130, 230) and a guide means (250) for guiding the carrier strip (20, 120, 220),
**characterised in that** the guide means (250) has a support member (260) for supporting at least partly the flexible suspension elements (30, 130, 230) bearing the anti-tamper seal (P).

16. The feeding device of claim 15,
**characterised in that** the receptacle for the supply (10, 110, 210) of flexible suspension elements (30, 130, 230) has a support member for supporting at least partly the flexible suspension elements (30, 130, 230) bearing the anti-tamper seal.

## Revendications

1. Réserve d'éléments souples de suspension, tels que des boucles de suspension, pour la fixation à des unités d'emballage en forme de boudin, contenant :
une bande support (20, 120, 220) présentant une face supérieure et une face inférieure planes ainsi que plusieurs éléments de suspension souples (30, 130, 230) disposés de manière amovible à l'aide d'un agent adhésif sur la face supérieure (26, 126, 226) de la bande support (20, 120, 220), leur axe longitudinal principal (A) étant au moins approximativement transversal par rapport à l'étendue longitudinale de la bande support (20, 120, 220), lesquels éléments de suspension peuvent être transportés par la bande support (20, 120, 220) en un lieu de distribution au niveau duquel un élément de suspension souple (30, 130, 230) se trouvant dans une position de distribution peut être prélevé de la bande support (20, 120, 220),
**caractérisée en ce que** chacun des éléments de suspension souples (30, 130, 230) disposés sur la bande support (20, 120, 220) présente un plomb (P), **en ce que** le plomb (P) contient un élément lisible et/ou inscriptible et **en ce que** l'élément électroniquement lisible et/ou inscriptible est une puce RFID.

2. Réserve selon la revendication 1,
**caractérisée en ce que** le plomb (P) est fixé au niveau d'une extrémité (34, 134, 234) de l'élément de suspension souple (30, 130, 230).

3. Réserve selon la revendication 1 ou 2,
**caractérisée en ce que** les éléments de suspension souples (30, 130, 230) sont disposés sur la bande support (20, 120, 220) de manière telle que les plombs (P) agencés au niveau des éléments de suspension souples (30, 130, 230) sont orientés vers le même côté latéral (24, 124, 224) de la bande support (20, 120, 220).

4. Réserve selon la revendication 3,
**caractérisée en ce que** les éléments de suspension souples (30, 130, 230) s'appliquent au centre de la bande support (20, 120, 220).

5. Réserve selon la revendication 3,
**caractérisée en ce que** les éléments de suspension souples (30, 130, 230) s'appliquent de manière asymétrique et décalée le long de leur axe longitudinal principal (A) sur la bande support (20, 120, 220).

6. Réserve selon l'une quelconque des revendications 1 à 5,
**caractérisée en ce que** la largeur de la bande support (20, 120, 220) correspond au moins à un quart de la longueur des éléments de suspension souples (30, 130, 230).

7. Réserve selon l'une quelconque des revendications 1 à 6,
**caractérisée en ce que** l'épaisseur de la bande support (20, 120, 220) correspond à l'épaisseur du matériau des boucles.

8. Réserve selon l'une quelconque des revendications 1 à 6,
**caractérisée en ce que** l'épaisseur de la bande support (20, 120, 220) correspond à la dimension et/ou au poids du plomb.

9. Réserve selon l'une quelconque des revendications 1 à 8,
**caractérisée en ce que** des informations peuvent être enregistrées sur le plomb (P).

10. Réserve selon la revendication 9,
**caractérisée en ce que** les informations sont des informations de fabricant et/ou de produit.

11. Réserve selon l'une quelconque des revendications 1 à 10,
**caractérisée en ce que** le plomb (P) est inscriptible.

12. Réserve selon l'une quelconque des revendications 1 à 10,
**caractérisée en ce que** le plomb (P) est imprimable.

13. Réserve selon l'une quelconque des revendications 1 à 12,
**caractérisée en ce que** le plomb (P) est relié à l'élément de suspension souple (30, 130, 230) de manière telle qu'il ne peut pas être détaché sans être brisé de l'élément de suspension souple (30, 130, 230).

14. Réserve selon l'une quelconque des revendications 1 à 13,
**caractérisée en ce que** le plomb (P) est serti au niveau de l'élément de suspension souple (30, 130, 230).

15. Dispositif d'acheminement pour l'acheminement d'éléments de suspension souples (30, 130, 230), tels que des boucles de suspension, dans une machine d'emballage, en particulier dans une clippeuse, à partir d'une réserve (10, 110, 210) d'éléments de suspension souples (30, 130, 230) selon l'une quelconque des revendications 1 à 8, contenant :
un logement pour la réserve (10, 110, 210) d'éléments de suspension souples (30, 130, 230) et un dispositif de guidage (250) pour guider la bande support (20, 120, 220),
**caractérisé en ce que** le dispositif de guidage (250) présente un élément d'appui (260) pour l'appui au moins partiel des éléments de suspension souples (30, 130, 230) pourvus du plomb (P).

16. Dispositif d'acheminement selon la revendication 15,
**caractérisé en ce que** le logement de la réserve (10, 110, 210) d'éléments de suspension souples (30, 130, 230) présente un élément d'appui pour l'appui au moins partiel des éléments de suspension souples (30, 130, 230) pourvus du plomb.
